# EUROPEAN PATENT APPLICATION

(11) **EP 2 604 757 A2**
(43) Date of publication of application: **19.06.2013**
(21) Application number: 12197614.6
(22) Date of filing: 17.12.2012
(51) Int. Cl.: E02D 27/00

(54) **A bearing apparatus**

(30) Priority: 16.12.2011 GB 201121740
(71) Applicant: MMC Group Limited, Stokesley, Yorkshire TS9 5JZ (GB)
(72) Inventor: McCullagh, John, Stokesley North Yorkshire TS9 5JZ (GB)
(74) Representative: Foot, Paul Matthew James

(57) **Abstract**

A bearing apparatus for a substantially vertically arranged monopile structure having a foundation wall including at least one non-linear portion, and a second component concentrically arranged to be supported on the foundation wall. The bearing apparatus comprises a first mounting portion configured to be supported by the foundation wall and a second mounting portion to mount the bearing apparatus to the second component. The bearing apparatus further comprises a compliant bearing portion intermediate the first and second mounting portions. The bearing portion has a non-linear profile shaped to correspond to the non-linear profile of the foundation wall.

## Description

The present invention related to a bearing apparatus. In particular, the present invention relates to a bearing apparatus suitable for use with a monopile structure.

Monopile structures such as wind turbines usually have a foundation and an upper or transition piece supported by the foundation. It is known to support the transition piece on the foundation with a series of bearings positioned at the top of a foundation wall, the bearings being configured to transfer static and dynamic loads from the transition piece to the foundation.

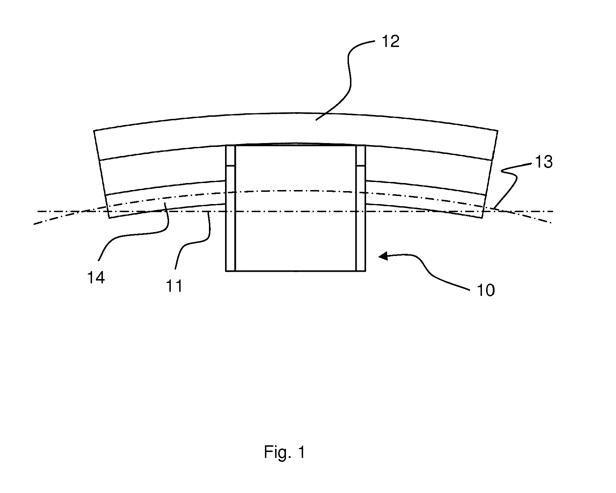

It is known to use rectangular bearings in such an arrangement, for example as shown at 10 in Figure 1. There are disadvantages to using rectangular bearings in standard cylindrical monopile structures. It is desirable for the bearings to have significant surface area in order to provide stable support for the transition piece. The length of each rectangular bearing 10 is restricted by the curve of the transition piece 12, as shown - the length cannot be increased beyond a certain point without the bearing being moved inwards, as the ends of the bearing will contact the internal surface of the transition piece 12. Figure 1 shows a centreline 11 of the bearing 10 meeting a centreline 13 of the transition piece 12.

In order to increase surface area of the bearing, therefore, the width of the bearing must be increased. Increasing the width of the bearing inevitably introduces eccentric loading, as the bearing must extend inwardly of the foundation wall 14 further than it extends outwardly thereof. Eccentric loading can lead to increased stress of the foundation structure at particular points, and also to the bearing.

In some circumstances excess load applied to the bearing can lead to unwanted buckling in a direction perpendicular to the load direction.

It is desirable to provide an improved form of load transfer for a transition piece on a monopile foundation.

According to the present invention there is provided a bearing apparatus for a substantially vertically arranged monopile structure having a foundation wall including at least one non-linear portion, and a second component concentrically arranged to be supported on the foundation wall. The bearing apparatus comprises a first mounting portion configured to be supported by the foundation wall; a second mounting portion to mount the bearing apparatus to the second component; and a compliant bearing portion intermediate the first and second mounting portions. The bearing portion has a non-linear profile shaped to correspond to the non-linear profile of the foundation wall.

A centreline of the bearing portion may substantially correspond to the centreline of the non-linear foundation wall, and the bearing portion may have an arcuate profile, the radius of the arc at the centreline of the bearing portion being substantially the same as the radius of the monopile structure. The bearing portion may have first and second parallel sides, and said sides may be parallel to the foundation wall centreline.

The first mounting portion may be a footplate configured to connect the bearing portion to the foundation wall, and the footplate may have a profile substantially corresponding to that of the bearing portion.

The bearing apparatus may further comprise a bracket plate, and the second mounting portion may be a fixing arrangement comprising at least one bracket connected to the bracket plate. The or each bracket may extend substantially perpendicular to the transition piece.

The second mounting portion may be configured for securement by fasteners to the second component. The second mounting portion may include a mounting plate having apertures for fasteners to secure the apparatus to the second component, and the mounting plate may be connected to the or each bracket.

The bearing portion may be elastomeric, and may comprise natural rubber, and/or synthetic rubber, which may be chloroprene rubber.

The bearing portion may comprise at least two layers of elastomeric material, which may be interleaved with layers of metal. The bearing portion may have an arrangement to maintain a preload prior to installation, and the arrangement may comprise at least one bolt. The or each bolt may extend through the bearing portion.

There is further provided a bearing apparatus for a substantially vertically arranged monopile structure having a foundation wall including at least one non-linear portion, and a second component concentrically arranged to be supported on the foundation wall. The bearing apparatus comprises a first mounting portion configured to be supported by the foundation wall, a second mounting portion to mount the bearing apparatus to the second component, and a compliant bearing portion intermediate the first and second mounting portions. The second mounting portion is configured for securement by fasteners to the second component.

The bearing apparatus may further comprise a bracket plate, and the second mounting portion may be a fixing arrangement comprising at least one bracket connected to the bracket plate. The or each bracket may extend substantially perpendicular to the transition piece.

The second mounting portion may include a mounting plate bolted to the second component, which may be connected to the or each bracket.

The bearing apparatus may be configured to receive force applied along a first axis, and may comprise at least one elongate support extending within the bearing portion substantially parallel to said first axis.

There is yet further provided a bearing apparatus configured to receive force applied along a first axis, the bearing apparatus comprising a compliant bearing portion; and at least one elongate support extending within the bearing portion substantially parallel to said first axis. The bearing portion comprises elastomeric material and the or each support is secured within the bearing portion by said elastomeric material.

The or each support may be secured within the bearing portion by elastomeric material only.

The or each support may be substantially encased by the elastomeric material. Only a certain proportion of the or each support may be secured to the elastomeric material, e.g. by etching and priming a portion of the support to adhere to the elastomeric material. In a preferred embodiment four layers of elastomeric material may be secured in this way.

At least part of the bearing portion may be configured to be moveable in relation to the or each support upon the application of force along said first axis. The bearing apparatus may define an aperture at one or both ends of the or each support configured to provide clearance for the or each support.

The or each support may be substantially cylindrical. The or each support may be of metal, and may be steel. The elastomeric material may comprise natural rubber and/or synthetic rubber, which may be chloroprene rubber.

The bearing portion may comprise at least two layers of elastomeric material. The layers of elastomeric material may be interleaved with layers of non-elastomeric material, which may be metal.

The bearing portion may have an arrangement to maintain a preload prior to installation. The arrangement to maintain a preload may comprise at least one bolt. The or each bolt may extend through the bearing portion.

There is further provided a monopile structure incorporating a bearing apparatus, and a wind turbine incorporating a bearing apparatus.

There is also provided a method of installing a bearing apparatus on a substantially vertically arranged monopile structure having a foundation wall including at least one non-linear portion, and a second component concentrically arranged to be supported on the foundation wall; the method comprising the steps of:
a) providing a bearing apparatus for example of a type according to the preceding paragraphs and having a bearing portion with an arrangement to maintain a preload prior to installation;
b) preloading the bearing portion
c) utilising the arrangement to maintain the preload during securement of the bearing apparatus to the monopile structure.

The method may further comprise the step of, following step c):
d) at least partially releasing said arrangement such that load is transferred from the arrangement to the foundation wall.

There is further provided a method of manufacturing a bearing apparatus comprising a compliant bearing portion, the bearing portion comprising elastomeric material and at least one elongate support extending within the bearing portion, the method comprising the steps of:
a) arranging the or each support within a mould;
b) arranging elastomeric material into the mould so as to at last partially surround the or each support; and
c) heating and compressing the elastomeric material within the mould;
wherein steps a) and b) can take place in any order.

The bearing portion may comprise at least two layers of elastomeric material interleaved with layers of non-elastomeric material, wherein step b) may further comprise arranging the layers of non-elastomeric material within the mould. The method may comprise, prior to step b):
d) arranging sheets of elastomeric material around the periphery of the mould.

Other aspects and preferred features of the invention will be apparent from the claims and following description of preferred embodiments made, by way of example only, with reference to the following drawings, in which:
Figure 1 is a plan view of an existing bearing apparatus positioned on a monopile structure;
Figure 2 is a side view of a wind turbine and support structure;
Figure 3 is a partial cross-sectional view through the wind turbine and support structure of Figure 2, showing a bearing apparatus according to an embodiment of the present invention;
Figure 4 is a perspective view of a bearing apparatus according to an embodiment of the present invention positioned on a monopile structure;
Figure 5 is a front view of the bearing apparatus of Figure 4;
Figure 6 is a plan view of the bearing apparatus of Figures 4 and 5;
Figure 7 is a plan view of a monopile structure with a series of bearing apparatus of Figures 4 to 6;
Figure 8 is a perspective view of a bearing apparatus according to a second embodiment of the present invention positioned on a monopile structure;
Figure 9 is a front view of the bearing apparatus of Figure 8;
Figure 10 is a plan view of the bearing apparatus of Figures 8 and 9;
Figure 11 is a perspective view of a bearing portion according to a third embodiment of the present invention;
Figure 12 is a cross-sectional view through the bearing portion of Figure 11 along the line A-A, with a top plate and footplate; and
Figure 13 is a perspective view of a bearing apparatus according to the embodiment of Figures 11 and 12 with a preload arrangement.

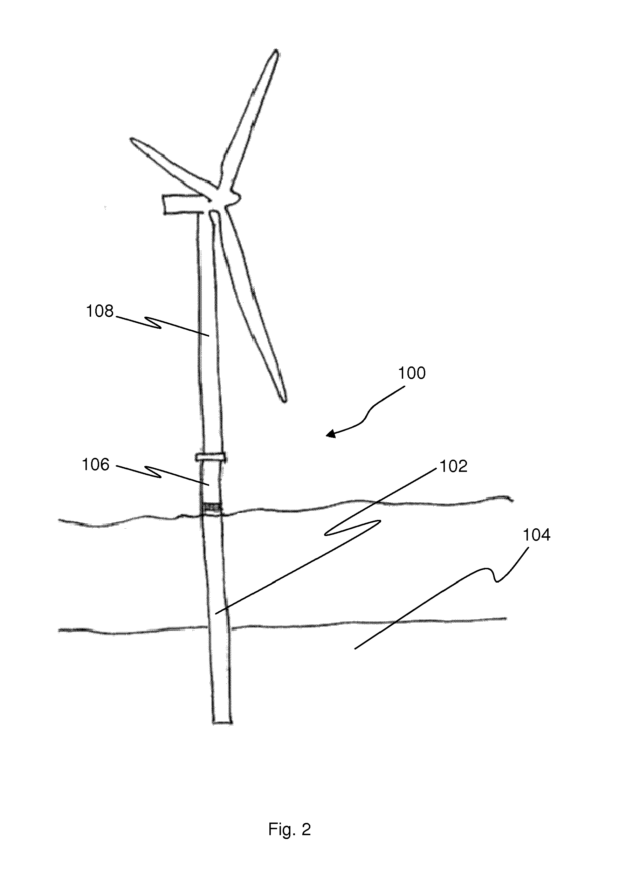

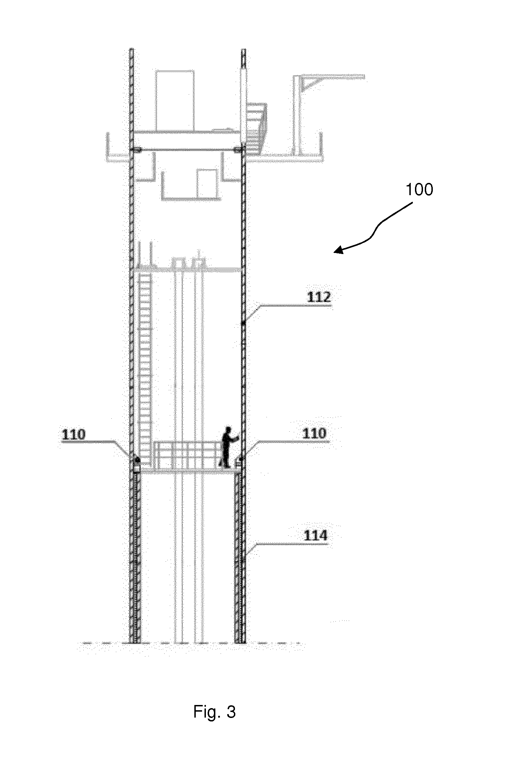

Figures 2 and 3 show a substantially vertically arranged monopile structure 100, i.e. a structure having a single foundation structural element, in the form of an offshore wind turbine and support structure. The wind turbine and support structure 100 has a foundation portion 102 which is in this embodiment driven into the seabed 104. The foundation portion 102 is configured to support an intermediate component 106 upon which a turbine portion 108 is supported.

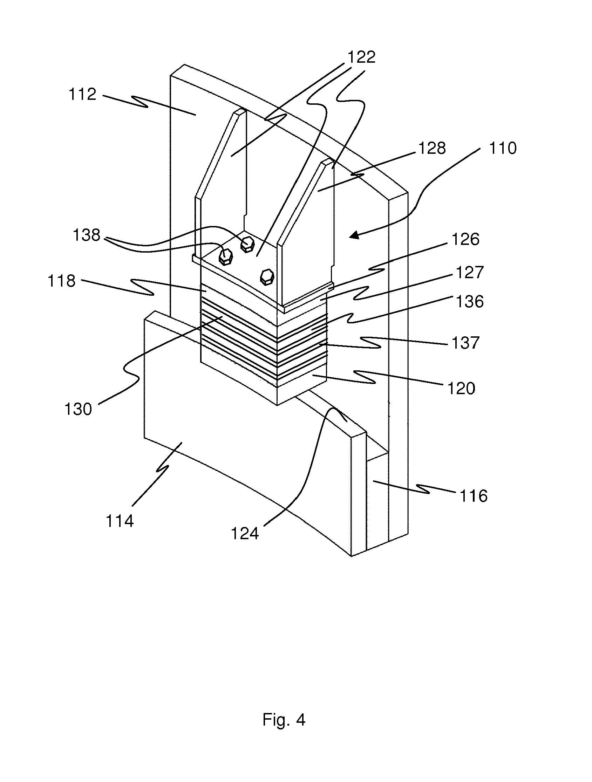

In this embodiment, the foundation portion 102 comprises a foundation wall 114 and the intermediate component is a transition piece 112 supported on the foundation wall 114. Both the foundation wall 114 and the transition piece 112 are cylindrical, i.e. non-linear, and are concentrically arranged with respect to one another. The transition piece 112 extends outside the foundation wall 114, as shown in Figure 2. The gap between the transition piece 112 and the foundation wall 114 is filled with grout 116 (see Figure 4), though in alternative embodiments other filling means may be used.

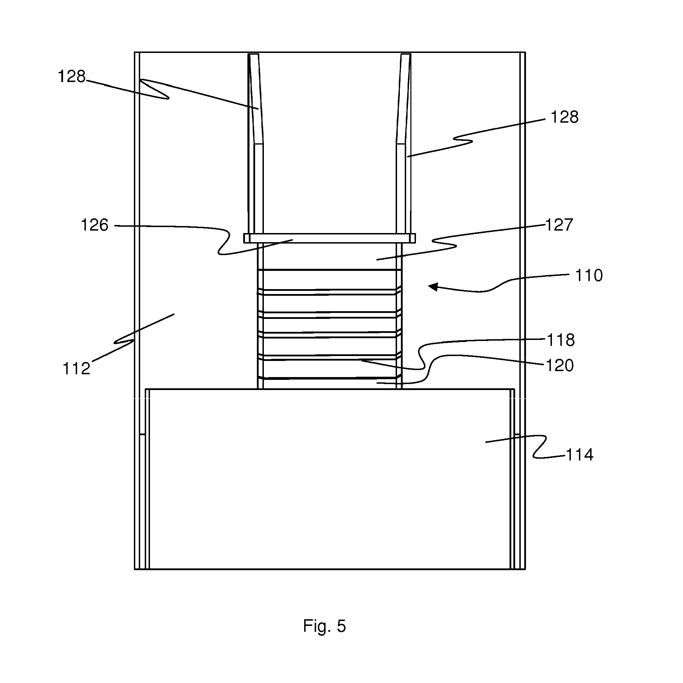

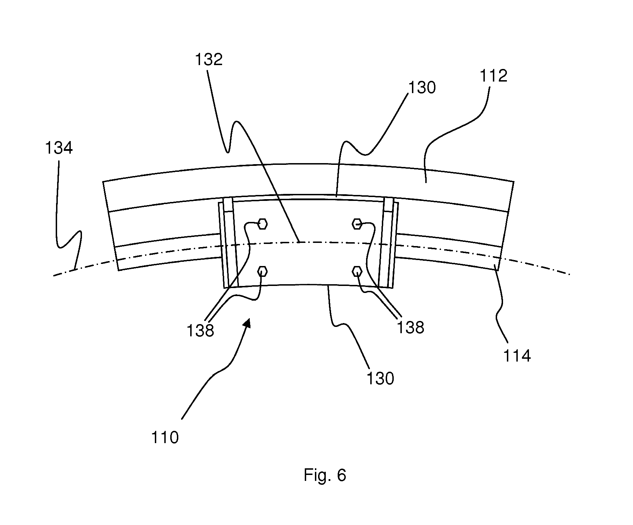

With reference to Figures 4, 5 and 6, a bearing apparatus suitable for supporting the intermediate component 106 on the foundation portion 102 is indicated generally at 110.

In this embodiment, the bearing apparatus 110 comprises a compliant bearing portion 118 and first and second mounting portions 120, 122. The first mounting portion is a bearing bottom plate or footplate 120 at the underside of the bearing portion 118, which is supported by an upper end 124 of the foundation wall 114. The footplate 120 is in this embodiment keyed to the foundation wall 114, though in alternative embodiments other suitable attachment means (e.g. fixing to the foundation wall 114 with dowels) may be used. The footplate 120 and bearing portion 118 are wider than the foundation wall 114, so extend either side thereof. The footplate, bracket plate and brackets are in this embodiment of grade S355 steel, although other suitable materials may be used.

The bearing apparatus 110 further comprises a bracket plate 126 and a bearing top plate 127 at the upper side of the bearing portion 118. The bracket plate 126 is connected to the bearing portion by means of bolts 138 (see below). The second mounting portion 122 comprises the bracket plate 126 and two load transfer brackets 128. The brackets 128 extend between the bracket plate 126 and the transition piece 112 radially inwardly from the transition piece 112, so are not parallel to one another, to connect the bearing apparatus 110 to the transition piece 112. The brackets 128 are in this embodiment welded to the transition piece 112, though in alternative embodiments other suitable attachment means may be used.

The bearing portion 118 is shaped such that its profile generally follows the arcuate transition piece 112 and foundation wall 114. That is, the bearing portion 118 has two parallel arcuate sides 130, e.g. as shown in Figure 4. A centreline 132 is defined midway between the two sides 130. When the bearing apparatus 110 is in position, e.g. as shown in Figures 2 to 4, the sides 130 are generally parallel to the transition piece 112 and foundation wall 114, and the centreline 132 of the bearing portion 118 is coincident with a centreline 134 of the foundation wall 114. The radius of the arc of the bearing portion centreline 132 is thus substantially the same as the radius of the foundation wall 114. The profile of the footplate 120 substantially corresponds to the profile of the bearing portion 118.

In this embodiment the bearing portion 118 is configured to fit a standard offshore wind turbine, and is approximately 180mm wide (i.e. from side 130 to side 130) and approximately 300mm high. The bearing portion 118 has an arcuate length of approximately 320mm along the centreline 132. The size and shape of the bearing portion 118 can be adjusted to suit other monopile structures.

The bearing portion 118 of this embodiment comprises layers 136 (e.g. as shown in Figure 4) of elastomeric material interleaved with layers of metal 137. In this embodiment the layers 137 are of steel, though other suitable materials may be used in alternative embodiments. The bearing portion 118 is of synthetic rubber such as chloroprene rubber, though in other embodiments it may be of natural rubber or a natural rubber blend.

The bearing portion 118 is in this embodiment preloaded prior to installation. A preload arrangement, which in this embodiment comprises pre-stressing bolts 138 that are inserted through corresponding apertures (not shown) in the bracket plate 126 and bearing top plate 127 into the bearing portion 118 in order to maintain preloading. The bolts 138 extend through corresponding apertures (not shown) in the layers 136, 137, and through apertures (not shown) in the footplate 120. The ends (not shown) of the bolts 138 extend either side of the foundation wall 114. The pre-stress compression load is in this embodiment induced prior to installation of the bearing by application of an external force from a hydraulic ram press, and maintained by tightening the bolts 138. In other embodiments means other than bolts may be used to provide and maintain preloading. After installation the bolts 138 are released to transfer the preloading from the bolts into the foundation of the turbine. In other embodiments, the bolts may be only partially released, or maintained in the tightened state permanently.

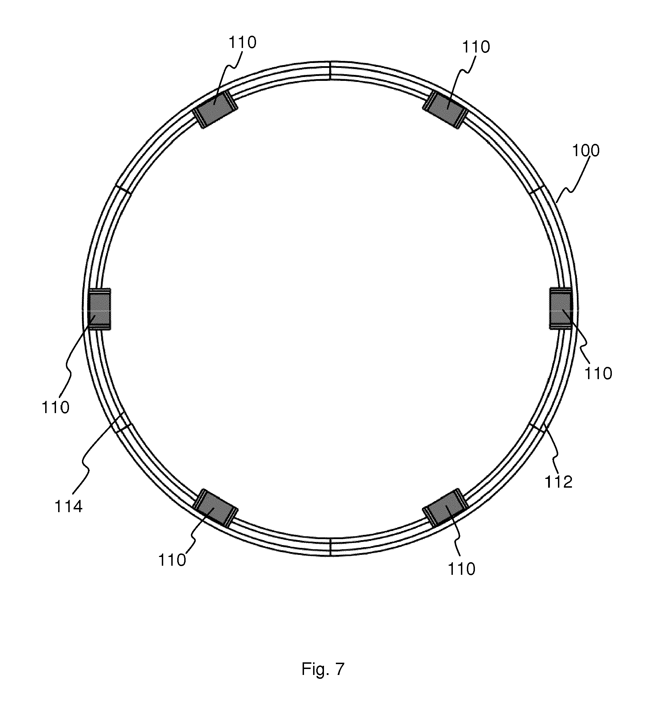

Figure 7 shows the turbine and support structure 100 with six bearing apparatus 110 attached thereto. The bearing apparatus 110 are equally spaced from one another about the cylindrical foundation wall 114 of the turbine and support structure 100. Such an arrangement provides stable support for the transition piece 112. More or fewer apparatus 110 may be used to support the transition piece 112 in other embodiments.

The second mounting portion 122 is in this embodiment fastened to the transition piece 112 by the load transfer brackets 128. The bearing portion 118 is then mounted on the foundation wall 114. Shims (not shown) may then inserted between the layers 136, 137 to ensure that the transition piece 112 is properly supported if needed. The bearing apparatus 110 may be retro-fitted to the turbine and support structure 100, or may be fitted on installation of the turbine and support structure 100.

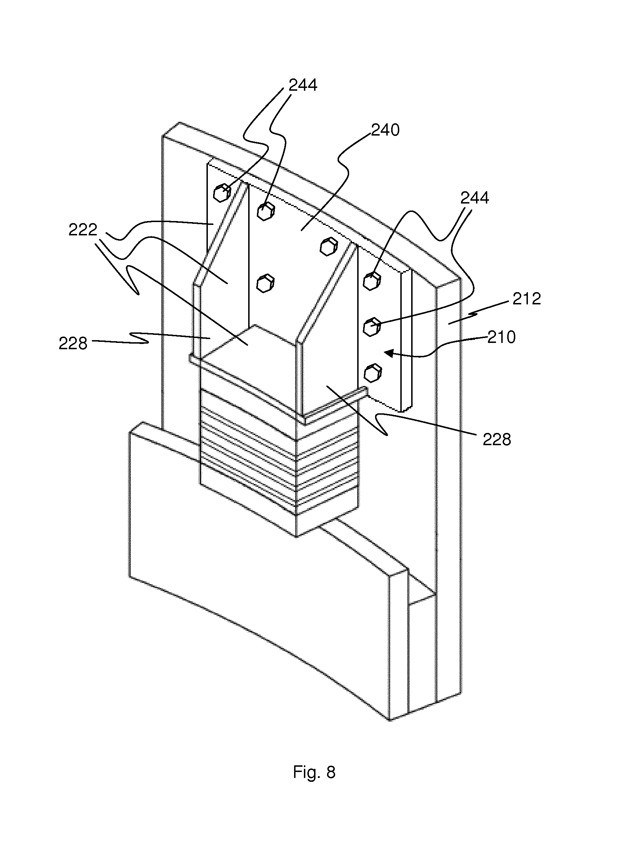

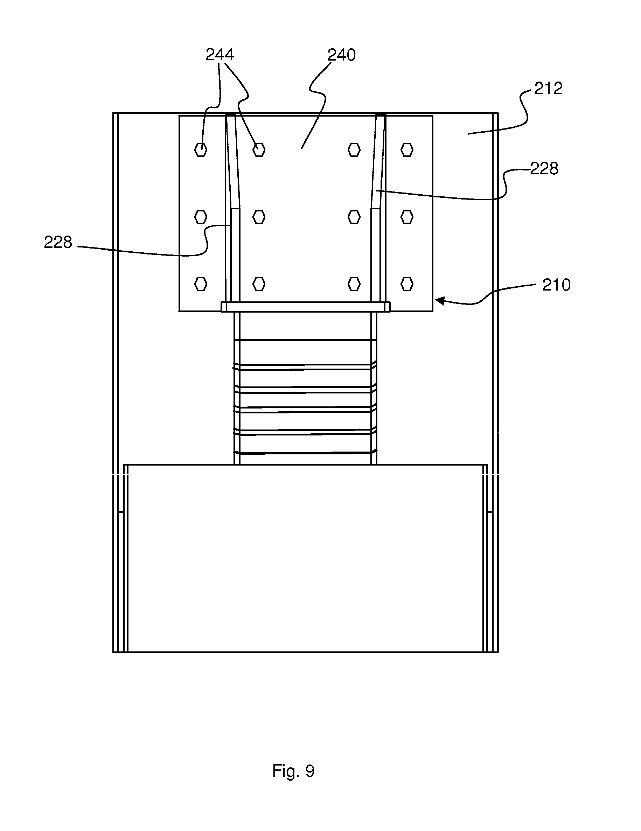

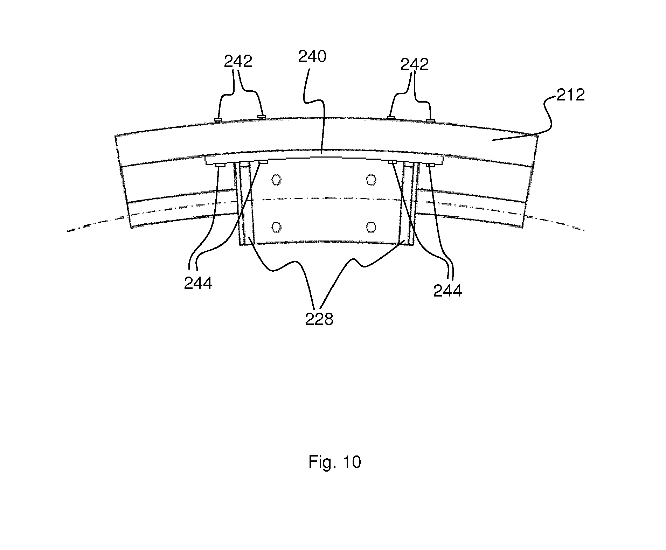

Figures 8, 9 and 10 show an alternative embodiment of the bearing apparatus of Figures 4 to 6, wherein features which are substantially the same as those of the previous embodiment are given corresponding reference numbers with the additional prefix "2".

In this embodiment the bearing apparatus 210 includes, as part of the second mounting portion 222, a mounting plate 240 configured to mount the bearing apparatus 210 to the transition piece 212. The brackets 228 are in this embodiment welded to the mounting plate 240 rather than directly to the transition piece 212. The mounting plate 240 is connected to the transition piece 212, thus mounting the bearing apparatus 210 thereto.

The mounting plate 240 is in this embodiment bolted to the transition piece 212. A series of bolts 242 pass through apertures (not shown) in the mounting plate 240 and corresponding apertures (not shown) in the transition piece 212, so that the bolts 242 extend from the interior to the exterior of the transition piece 212. The bolts 242 are secured by nuts 244, which are in this in embodiment within the interior of the transition piece 212, i.e. adjacent the mounting plate 240. In alternative embodiments (not shown), the nuts 244 may be at the exterior of the transition piece 212. In other embodiments other suitable releasable or non-releasable fasteners such as rivets may be used.

The mounting plate 240 is curved so that its profile follows that of the arcuate transition piece 212. The mounting plate 240 may thus lie against the transition piece 212.

The advantage of this embodiment is that bolting rather than welding is required to mount the bearing apparatus to the transition piece 212. This would be advantageous in circumstances where welding the second mounting portion to the transition piece 212 would be difficult to achieve.

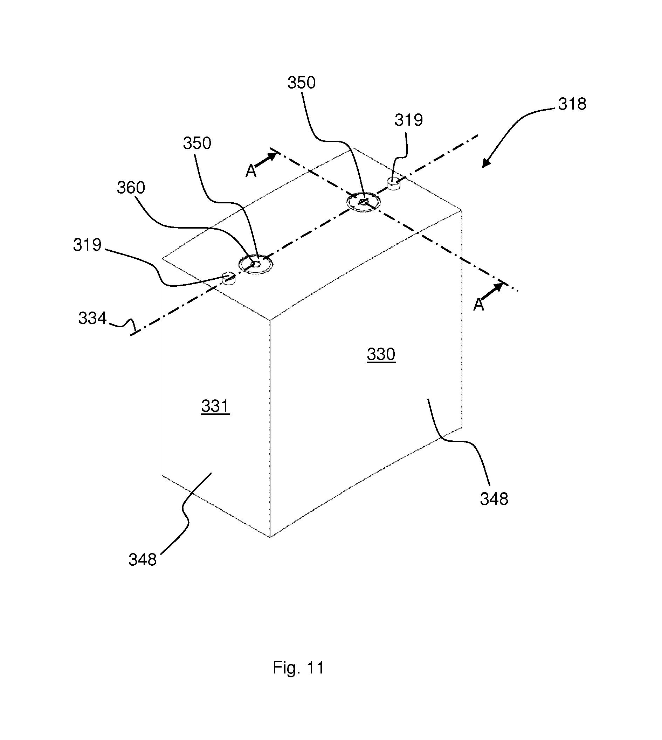

Figures 11, 12 and 13 show an alternative embodiment of the bearing apparatus of Figures 4 to 6 and 8 to 10, wherein features which are substantially the same as those of the previous embodiment are given corresponding reference numbers with the additional prefix "3".

The bearing apparatus 310 of this embodiment is similar to those of the previous embodiment, having a compliant bearing portion 318 of elastomeric material. Again, the bearing portion 318 is shaped so that its profile generally follows that of the cylindrical monopile structure 100, although in other embodiments, the profile could be straight.

In this embodiment, layers of elastomeric material 336 are interleaved with layers of substantially rigid non-elastomeric material 337. In this embodiment the non-elastomeric material is metal, preferably steel, though in other embodiments other metals or other suitable substantially rigid materials may be used.

The metal layers 337 of this embodiment are approximately 2mm thick, and the elastomeric layers 336 are approximately 8mm thick, though in alternative embodiments other suitable thicknesses may be used. In this embodiment, the elastomeric material is of synthetic rubber such as chloroprene rubber, though in other embodiments it may be of natural rubber or a natural rubber blend.

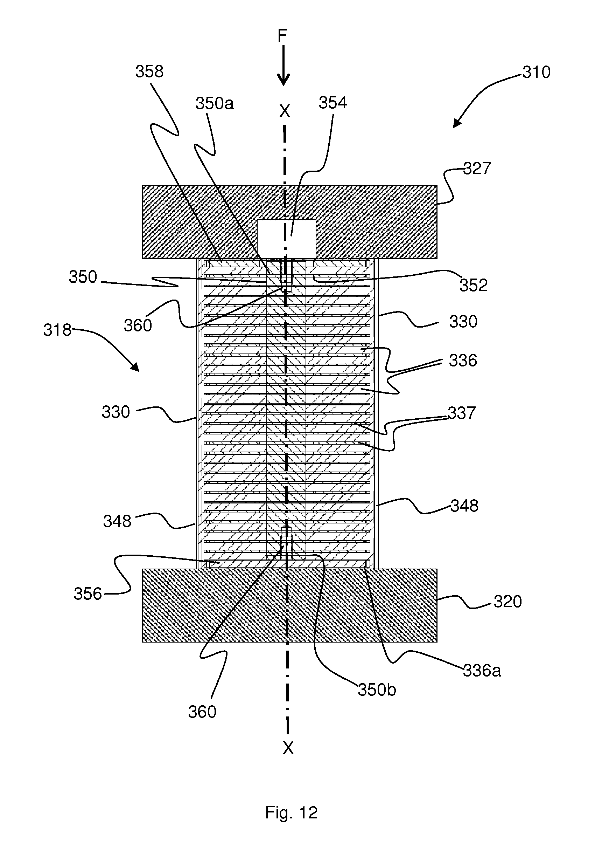

In this embodiment, the metal layers 337 do not extend to the sides 330 or ends 331 (e.g. see Figure 12), i.e. the metal layers 337 are encased in elastomeric material. The sides 330 and ends 331 of the bearing portion 318 comprise sheets of elastomeric material 348. In this embodiment the side an end sheets 348 are also approximately 8mm thick, though in alternative embodiments they may be of another suitable thickness. Thinner layers of elastomeric material 336a form the top 333a and bottom 333b of the bearing portion 318. An advantage of encasing the metal layers 337 is that protection against corrosion of the metal layers 337 is provided.

The bearing apparatus 310 of this embodiment comprises two supports 350 extending within the bearing portion 318. The supports 350 are configured to inhibit buckling of the bearing portion 318, as follows. The bearing apparatus 310 is configured to receive force in a substantially vertical direction, substantially perpendicular to the layers 336, 337, e.g. as indicated by arrow F in Figure 12. The supports 350 are elongate members having a longitudinal axis X-X (see Figure 12), and extend within the bearing portion 318 such that their axes X-X are substantially parallel to the direction of force F. Additionally, in preferred embodiments, the supports are substantially equidistantly arranged between the sides 330 and aligned with the centreline 334. The supports 350 brace the compliant bearing portion 318, limiting movement of the layers 336, 337 perpendicular to the direction of force F. The likelihood of the bearing portion 318 buckling when force is applied is thus advantageously reduced.

The supports 350 are in this embodiment cylindrical, having a diameter of approximately 40mm. In alternative embodiments the supports may have a different diameter, or a different cross-section. The supports 350 are in this embodiment of steel, though in alternative embodiments other suitable materials may be used.

The supports 350 are secured within the bearing portion 318 by the elastomeric material. The bearing portion is formed by compression moulding (as described in further detail below), during which process the layers of elastomeric material 336 are moulded around the supports 350 and certain layers are secured to the supports within the bearing portion 318. The layers 336 and the metal layers 337 each define two apertures 352 configured to provide clearance around the supports 350, so that the layers 336, 337 are moveable along the axis X-X in relation to the supports 350 when the bearing portion 318 is compressed. On compression, the supports 350 are configured so they may (depending upon the applied load) partly extend beyond the top 333a of the bearing portion 318. The supports 350 define a threaded bore 360 at each end, which are used to secure the supports 350 during the compression moulding process.

In this embodiment, the apertures 352 are cylindrical and have a diameter of 55mm, though in alternative embodiments they may be of different size and shape to correspond with the size and shape of the supports 350.

The top plate 327 of this embodiment defines two apertures 354 extending at least partway into the underside of the top plate 327 and configured to provide clearance for upper ends 350a of the supports 350 upon compression of the bearing portion 318. The bearing portion 318 has two lugs 319 fastened to the top 333a. The lugs 319 are configured to extend into corresponding apertures (not shown) in the underside of the top plate 327, in order to locate the top plate 327 in relation to the bearing portion 318. Similar lugs (not shown) are fastened to the bottom 333b, and configured to extend into corresponding apertures (not shown) in the topside of the footplate 320.

The bearing portion 318 of this embodiment is manufactured as follows. A mould (not shown) in the shape of the finished bearing portion 318 is provided. The mould is lined with sheets of elastomeric material 348. A layer of elastomeric material 336a is placed on the base of the mould, followed by a metal layer 356 of approximately 7mm thickness. Alternating elastomeric and metal layers 336, 337 are built up, with a final metal layer 358 of approximately 7mm thickness followed by a final elastomeric layer 336a. The supports 350 are then inserted through the apertures 352, and secured in the mould with bolts (not shown) inserted into the bores 360 at the upper ends 350a.

The mould is then heated to a temperature in a suitable range, e.g. between 110°C and 130°C, preferably 120°C, and pressurised to a suitable pressure, e.g. between 250 bar and 350 bar, preferably 300 bar. The mould is kept at this pressure and temperature for around 6 hours, and vulcanisation of the elastomeric material takes place. The mould is then cooled and the bearing portion 318 is removed from the mould.

In this embodiment, some layers 336 of elastomeric material are vulcanised to the support rod in order to limit vertical movement of the supports 350. The lower part of the supports 350 are etched and treated with a suitable primer, so that the elastomeric material adjacent those parts of the supports 350 adheres to the supports 350. In this embodiment, the lowest four layers of the elastomeric material are vulcanised to the supports 350, though in alternative embodiments more or fewer layers 336 may be vulcanised to the supports 350.

In alternative embodiments the supports 350 may be inserted into the mould before some or all of the layers 336, 337, 358, 336a.

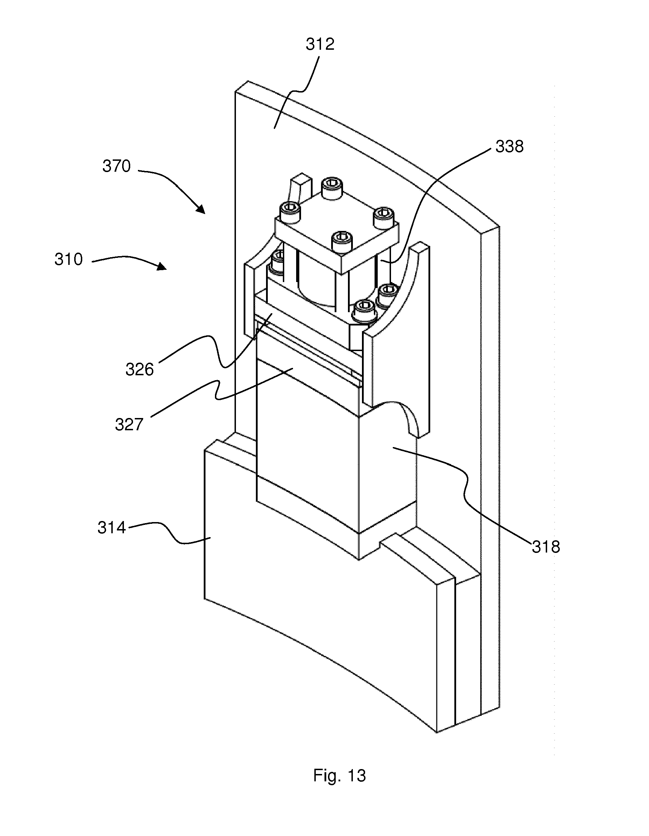

Figure 13 shows the bearing apparatus 310 with a preload arrangement 370. In this embodiment, as in the first embodiment, the preload arrangement comprises pre-stressing bolts 338 inserted through apertures (not shown) in the bracket plate 326 and top plate 327 into the bearing portion 318 in order to maintain preloading.

In alternative embodiments (not shown) the bearing apparatus 110, 210 may have a different profile in order to correspond to a non-cylindrical monopile structure. The footplate 120 may have a different profile to that of the bearing portion 118. Other suitable elastomeric materials may be used. The transition piece 112 may extend radially within the foundation wall 112, in which case the bearing apparatus 110 may be installed on the outer surface of the turbine and support structure 100.

The metal layers 137, 237 of the first and second embodiments may be fully encased in elastomeric material, e.g. as described in the third embodiment. Alternative temperatures and/or pressures may be used for vulcanisation, and additives such as sulphur may be used in the elastomeric material to aid vulcanisation. The bearing apparatus 310 may comprise only one support 350, or may comprise more than two supports 350.

The supports 350 can be used with the first and second embodiments of the invention, to inhibit buckling of those bearing apparatus 110, 210.

The skilled person will appreciate that there are numerous advantages to the bearing apparatus 110, 210, 310 over the bearing apparatus 10 of the prior art. The length of the bearing apparatus 110, 310 can be increased to increase surface area of the bearing portion 118 without constraint from the transition piece 112, due to the profile of the bearing portion 118 corresponding to that of the foundation wall 114 and transition piece 112. The centreline 132 of the bearing portion 118 can remain coincident with the centreline 134 of the foundation wall 114 regardless of the length of the bearing apparatus 110, again due to the corresponding profiles of the components 118, 114, 112. Eccentric loading can therefore be avoided, as equal areas of the bearing portion 118 extend inwardly and outwardly of the foundation wall 114. Additional brackets may be provided for longer bearing apparatus intermediate the ends.

The supports of the bearing apparatus 310 provide a simple and effective method for reducing the likelihood of buckling of the bearing portion 318. Securing the supports 350 within the bearing portion 318 with the elastomeric material avoids the need for additional bolts or other types of fastening.

## Claims

1. A bearing apparatus for a substantially vertically arranged monopile structure having a foundation wall including at least one non-linear portion, and a second component concentrically arranged to be supported on the foundation wall;
the bearing apparatus comprising a first mounting portion configured to be supported by the foundation wall;
a second mounting portion to mount the bearing apparatus to the second component; and
a compliant bearing portion intermediate the first and second mounting portions;
wherein the bearing portion has a non-linear profile shaped to correspond to the non-linear profile of the foundation wall.

2. A bearing apparatus according to claim 1 wherein a centreline of the bearing portion substantially corresponds to the centreline of the non-linear foundation wall, preferably wherein the bearing apparatus is for a cylindrical monopile structure, wherein the bearing portion has an arcuate profile, the radius of the arc at the centreline of the bearing portion being substantially the same as the radius of the monopile structure.

3. A bearing apparatus according to claim 1 or claim 2 wherein the first mounting portion is a footplate configured to connect the bearing portion to the foundation wall, preferably wherein the footplate has a profile substantially corresponding to that of the bearing portion.

4. A bearing apparatus according to any preceding claim further comprising a bracket plate, preferably wherein the second mounting portion is a fixing arrangement comprising at least one bracket connected to the bracket plate, more preferably wherein the or each bracket is arranged to extend substantially perpendicular to the second component.

5. A bearing apparatus according to any preceding claim wherein the bearing portion is elastomeric, preferably chloroprene synthetic rubber.

6. A bearing apparatus for a substantially vertically arranged monopile structure having a foundation wall including at least one non-linear portion, and a second component concentrically arranged to be supported on the foundation wall;
the bearing apparatus comprising a first mounting portion configured to be supported by the foundation wall;
a second mounting portion to mount the bearing apparatus to the second component; and
a compliant bearing portion intermediate the first and second mounting portions;
wherein the second mounting portion is configured for securement by fasteners to the second component, preferably further comprising a bracket plate, more preferably wherein the second mounting portion is a fixing arrangement comprising at least one bracket connected to the bracket plate and yet more preferably wherein the or each bracket extends substantially perpendicular to the transition piece.

7. A bearing apparatus according to any preceding claim configured to receive force applied along a first axis, and further comprising at least one elongate support extending within the bearing portion substantially parallel to said first axis.

8. A bearing apparatus configured to receive force applied along a first axis, the bearing apparatus comprising:
a compliant bearing portion; and
at least one elongate support extending within the bearing portion substantially parallel to said first axis;
wherein the bearing portion comprises elastomeric material; and
wherein the or each support is secured within the bearing portion by said elastomeric material.

9. A bearing apparatus according to claim 8 wherein the or each support is substantially encased by the elastomeric material.

10. A bearing apparatus according to claim 8 or claim 9 wherein at least part of the bearing portion is configured to be moveable in relation to the or each support upon the application of force along said first axis, and/or wherein the bearing apparatus defines an aperture at one or both ends of the or each support configured to provide clearance for the or each support.

11. A bearing apparatus according to any one of claims 8 to 10 wherein the or each support is substantially cylindrical, and/or wherein the or each support is of metal, preferably steel, and/or wherein the elastomeric material comprises natural rubber and/or synthetic rubber, preferably chloroprene rubber.

12. A bearing apparatus according to any preceding claim wherein the bearing portion comprises at least two layers of elastomeric material, preferably wherein said layers of elastomeric material are interleaved with layers of non-elastomeric material.

13. A wind turbine or other monopile structure incorporating at least one bearing apparatus according to any preceding claim.

14. A method of installing a bearing apparatus on a substantially vertically arranged monopile structure having a foundation wall including at least one non-linear portion, and a second component concentrically arranged to be supported on the foundation wall; the method comprising the steps of:
a) providing a bearing apparatus according to any preceding claim having a bearing portion with an arrangement to maintain a preload prior to installation;
b) preloading the bearing portion
c) utilising the arrangement to maintain the preload during securement of the bearing apparatus to the monopile structure, preferably further comprising the step of, following step c):
d) at least partially releasing said arrangement such that load is transferred from the arrangement to the foundation wall.

15. A method of manufacturing a bearing apparatus comprising a compliant bearing portion, the bearing portion comprising elastomeric material and at least one elongate support extending within the bearing portion, the method comprising the steps of:
a) arranging the or each support within a mould;
b) arranging elastomeric material into the mould so as to at last partially surround the or each support; and
c) heating and compressing the elastomeric material within the mould;
wherein steps a) and b) can take place in any order.
